# EUROPEAN PATENT APPLICATION

(11) **EP 3 333 615 A1**
(43) Date of publication of application: **13.06.2018**
(21) Application number: 16832847.4
(22) Date of filing: 26.07.2016
(51) Int. Cl.: G02B 27/01, B60K 35/00, G02B 5/30

(54) **HEAD-UP DISPLAY DEVICE**

(30) Priority: 06.08.2015 JP 2015155913
(71) Applicant: Polatechno Co., Ltd., Joetsu-shi, Niigata 944-0101 (JP)
(72) Inventor: YAMAMOTO, Michiyuki, Joetsu-shi, Niigata 944-0101 (JP); TAKEICHI, Yoshitaka, Joetsu-shi, Niigata 944-0101 (JP); NISHIKATA, Takahiko, Joetsu-shi, Niigata 944-0101 (JP)
(74) Representative: Balder IP Law, S.L.
(86) International application number: PCT/JP2016/071872
(87) International publication number: WO 2017/022568

(57) **Abstract**

Provided is a head-up display device provided with: a display that outputs an image; and a case that houses the display, wherein the case is provided with a light-transmitting cover through which the image output from the display is transmitted to the outside, and the light-transmitting cover has a structure in which a first polarizing plate and a second polarizing plate are laminated.

## Description

### TECHNICAL FIELD

The present invention relates to a head-up display device.

### BACKGROUND

Head-up display devices are available that reflect an image displayed on a display unit onto a mirror for showing its virtual image on a glass surface, for example. Head-up display devices are used for displaying information overlaid with the user's normal field of view and are used in a variety of application examples, including automobiles which display information such as vehicle speed on a windshield.

### SUMMARY

### TECHNICAL PROBLEM

An on-vehicle head-up display device includes a translucent cover that protects a projection opening for projecting an image from the device body to a projection unit such as glass against entrance of dust and dirt. A polycarbonate plate is used as the translucent cover. There has been demand for such a cover having polarization properties to block entrance of sunlight without reducing the brightness of outgoing light.

However, a cover including a polycarbonate plate and a normal polarizing plate bonded to the polycarbonate plate to provide polarization properties, when heated, may generate a curve in the polycarbonate plate. This would cause distortion in a projected image, or cause removal of the polycarbonate plate from its case. The polycarbonate plate, which would cause double refraction, may also disturb the polarized light to be emitted and lower the image quality.

### SOLUTION TO PROBLEM

In accordance with one aspect of the invention, a head-up display device includes a display unit configured to output an image, and a case housing the display unit. The case includes a light-transmitting cover that transmits the image externally output from the display unit. The light-transmitting cover has a laminated structure including a plurality of layered polarizing plates.

### ADVANTAGEOUS EFFECTS OF INVENTION

The present invention provides a head-up display device including a cover with high heat resistance, which reduces distortion of an image.

### BRIEF DESCRIPTION OF DRAWINGS

[FIGURE 1]

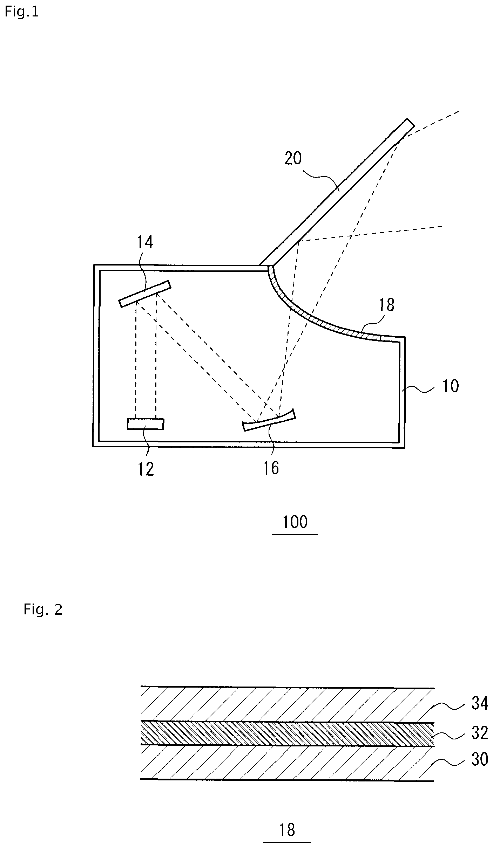

   FIG. 1 is a diagram illustrating a structure of a head-up display according to an embodiment of the present invention.
[FIGURE 2]
   FIG. 2 is a diagram illustrating a structure of a cover according to an embodiment of the present invention.

### DESCRIPTION OF EMBODIMENTS

As illustrated in FIG. 1, a head-up display device 100 according to an embodiment of the present invention includes a case 10, a display unit 12, a flat mirror 14, a concave mirror 16, a light-transmitting cover 18, and a projection unit 20.

The case 10 houses elements forming the head-up display device 100, such as the display unit 12, the flat mirror 14, and the concave mirror 16. The case 10 is made of a material having mechanical strength, such as plastic or metal.

The display unit 12 outputs an image to be projected by the head-up display device 100 and is composed of a liquid crystal display (LCD), for example. Image light emitted from the display unit 12 undergoes straight line polarization.

The flat mirror 14 reflects the image light emitted from the display unit 12 onto the concave mirror 16. The concave mirror 16 then reflects the image light from the flat mirror 14 toward the projection unit 20. The concave mirror 16 magnifies the image light with a desired magnification and projects the magnified image light onto the projection unit 20.

The light-transmitting cover 18 is a translucent plate-like member fitted to an opening portion formed in the case 10. The light-transmitting cover 18 transmits the image light reflected by the concave mirror 16 outside the case 10 and also blocks entry of dust or dirt into the case 10. The structure of the light-transmitting cover 18 will be described below.

The projection unit 20 receives the image light having travelled from the concave mirror 16 and shows its virtual image as a projection image. The projection unit 20 may be a half mirror or a holographic element to secure the user's normal sense of sight. In preferred embodiments, the projection unit 20 may be mounted at different angles and different positions with respect to the case 10. This structure enables the user to adjust the position and the angle of the projection unit 20 in accordance with the user's line of sight for easy viewing of the projection image.

The light-transmitting cover 18 includes a plurality of polarizing plates in a laminated configuration. FIG. 2 illustrates a sectional structure of an example light-transmitting cover 18. In this embodiment, the light-transmitting cover 18 has a laminated structure of a first polarizing plate 30, an adhesive layer 32, and a second polarizing plate 34. The number of polarizing plates is not limited to two, and three or more polarizing plates may form a laminated structure.

The first polarizing plate 30 and the second polarizing plate 34 contain polarizers that transmit only light polarized in specific directions. The first polarizing plate 30 and the second polarizing plate 34 may be arbitrarily selected. In preferred embodiments, there may be used a dye-based polarizing plate including a polyvinyl alcohol (PVA) film dyed with a dichromatic dye, for example. An example PVA film which can be used is VF-PS #7500 manufactured by Kuraray Co., Ltd. For example, a PVA film having an initial thickness of 75 µm is stretched to form a stretched film having a thickness of 30 µm.

The first polarizing plate 30 is formed on one surface of the PVA film. In preferred embodiments, the first polarizing plate 30 is formed of a dye-based material. More preferably, the dye-based material is a dichromatic dye. The dye-based material preferably contains an azo compound and/or its salt.

Specifically, in preferred embodiments, a dye-based material which satisfies the following chemical formula may be used: 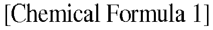 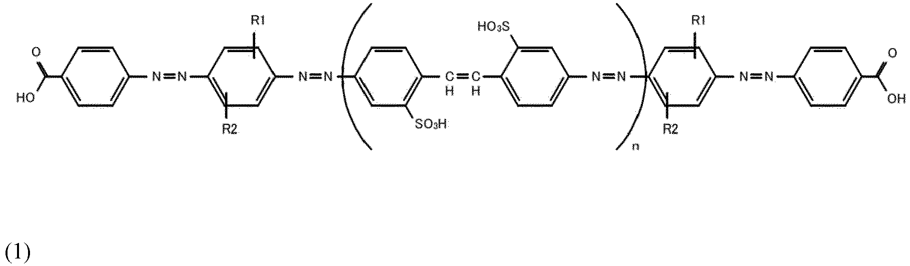
(1) In the above Formula, each of R1 and R2 independently represents a hydrogen atom, a lower alkyl group, or a lower alkoxyl group, respectively, and n is an azo compound or a salt thereof, which is denoted by 1 or 2.
(2) The azo compound and salt thereof described in (1), in which each of R1 and R2 is independently any of a hydrogen atom, a methyl group, and a methoxy group.
(3) The azo compound and salt thereof described in (1), in which R1 and R2 are hydrogen atoms.

In preferred embodiments, a material that can be obtained according to the following process is used. First, 13.7 parts of 4-amino benzoic acid are added to 500 parts of water, and the resultant mixture is dissolved with sodium hydroxide. The resultant substance is cooled, to which 32 parts of 35% hydrochloric acid are added at a temperature of 10°C or lower. Then, 6.9 parts of sodium nitrite are added and the mixture is stirred at 5 to 10°C for one hour. Further, 20.9 parts of aniline -ω-methanesulfonic acid soda are added to the mixture, and while stirring the mixture at 20 to 30°C, sodium carbonate is further added to obtain pH 3.5. The mixture is further stirred to complete the coupling reaction, and is filtered to obtain a monoazo compound. The monoazo compound thus obtained is stirred at 90°C in the presence of sodium hydroxide, and 17 parts of monoazo compound represented by the following chemical formula (2) are obtained.

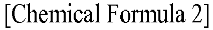

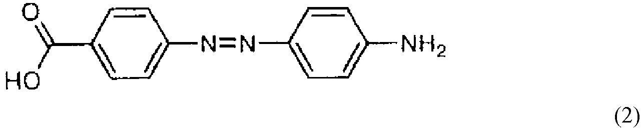

After 12 parts of monoazo compound of chemical formula (2) and 21 parts of 4, 4'-dinitrostilbene -2, 2' -sulfonic acid are dissolved in 300 parts of water, 12 parts of sodium hydroxide are added to the mixture, which is then subjected to condensation reaction at 90°C. The mixture is subsequently reduced with 9 parts of glucose, and after salting-out of the mixture using sodium chloride, the mixture is filtered to obtain 16 parts of an azo compound represented by the following chemical formula (3).

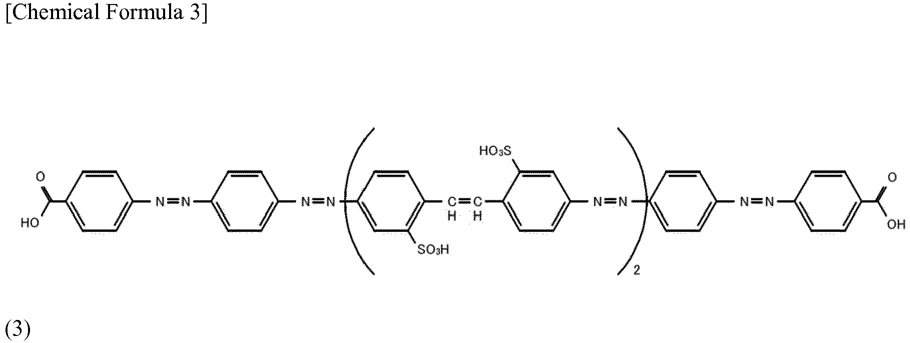

Further, a polyvinyl alcohol (PVA) film having a thickness of 75µm is immersed, as a substrate, in an aqueous solution at 45°C including 0.01% of dye of the compound (3), 0.01% of C.I. Direct Red 81, 0.03% of dye represented by the following Formula (4) shown in EXAMPLE 1 in JP 2622748 B, 0.03% of dye represented by the following Formula (5) shown in EXAMPLE 23 disclosed in JP 60-156759 A, and 0.1% of mirabilite, for four minutes. This film is stretched by a factor of five times in 3% boric acid solution at 50°C, washed with water while keeping a state of tension, and dried. This process provides a dye-based material having a neutral color (gray in the parallel position and black in the orthogonal position).

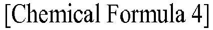

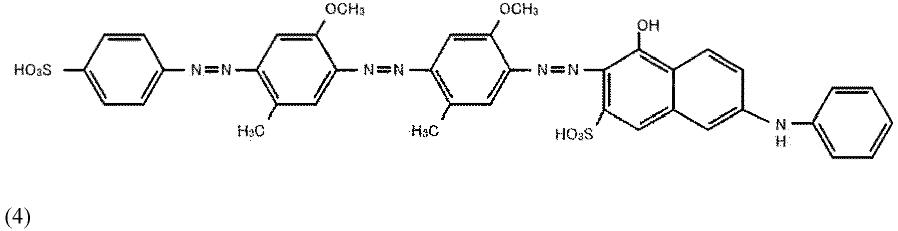

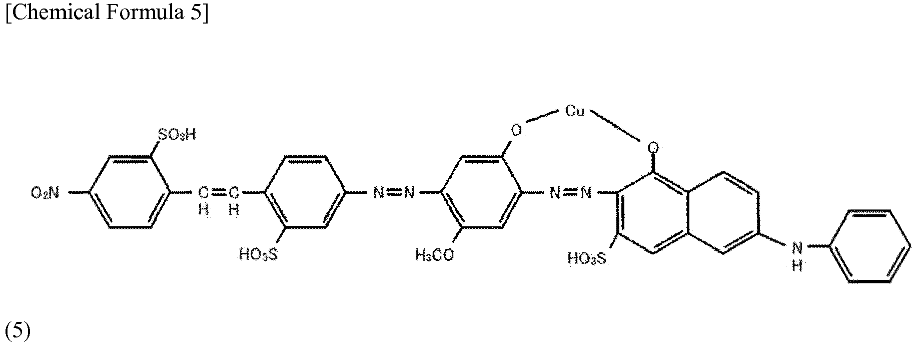

The first polarizing plate 30 may have a laminated structure including a polarizing film produced according to the manufacturing method described above bonded to a substrate. The substrate serves as a protective layer of the first polarizing plate 30. The substrate may be selected as desired. In preferred embodiments, the substrate may be a triacetylcellulose (TAC) film, an acrylic film, a cyclic olefin film, or the like, for example, or P960GL manufactured by TacBright Optronics Corporation, for example. While the substrate preferably has a thickness in the range of 20 µm or more and 200µm or less, the thickness is not limited to this range.

The first polarizing plate 30 can be formed as described above. The second polarizing plate 34 can be formed in a similar manner.

The adhesive layer 32 bonds the first polarizing plate 30 and the second polarizing plate 34 together. In preferred embodiments, the adhesive layer 32 is formed of an acrylic adhesive. Specifically, an adhesive that is produced by diluting solid components of acrylic or polyester adhesive with a solvent such as toluene and methyl ethyl ketone (MEK), for example, is dried to form the adhesive layer 32. More specifically, an adhesive is applied over one surface of the first polarizing plate 30 and the second polarizing plate 34 is bonded to the first polarizing plate 30. In this state, the adhesive is dried to form the adhesive layer 32. Any acrylic or polyester adhesive may be used. Further, an adhesive other than an acrylic or polyester adhesive may also be used. In preferred embodiments, the thickness of the adhesive layer 32 is 10 µm or more and 50µm or less.

The first polarizing plate 30 and the second polarizing plate 34 are bonded together such that the polarization directions of the respective polarizing plates form appropriate angles. In preferred embodiments, for example, the first polarizing plate 30 and the second polarizing plate 34 are bonded together such that their polarization directions are identical with each other or parallel to each other.

As described above, the present embodiment provides the light-transmitting cover 18 having sufficient mechanical strength. Specifically, the embodiment provides the light-transmitting cover 18 having polarization properties with a thickness of several hundreds of µm. The light-transmitting cover 18 having polarization properties can reduce the transmissivity for the outside light entering the case 10. On the other hand, by aligning the polarization direction of the image light emitted from the display unit 12 with the polarization direction of the light-transmitting cover 18, the image light can be transmitted outside the case 10 with a higher transmissivity than that of the outside light entering the case 10.

The light-transmitting cover 18 which uses an iodine polarization film, when heated to 90°C or higher, would suffer from discoloration of the film, and this would lower transmissivity of light. The light-transmitting cover 18 of the present embodiment, which employs a dye-based material for the first polarizing plate 30 and the second polarizing plate 34, would prevent curving of the light-transmitting cover 18 and maintain high transmissivity of light without discoloration, even under the environment at 90°C or higher. In particular, the light-transmitting cover 18 having symmetry with respect to a plane; that is, configured to have horizontal symmetry or configured to be symmetrical along the film-thickness direction, as illustrated in FIG. 2, reduces curving caused by heat.

Each of the first polarizing plate 30 and the second polarizing plate 34 may include a protective layer such as HC (Hard Coat), AG (Anti-Glare), AR (Anti-Reflection), and LR (Low-Reflection), for surface protection. In preferred embodiments, to prevent curving of the light-transmitting cover 18, the light-transmitting cover 18 including these protective layers has a symmetrical configuration along the film-thickness direction.

## Claims

1. A head-up display device comprising:
a display unit configured to output an image; and
a case housing the display unit,
the case including a light-transmitting cover that transmits the image externally output from the display unit, and
the light-transmitting cover having a laminated structure including a plurality of layered polarizing plates.

2. The head-up display device according to claim 1, wherein
the polarizing plates are dye-based polarizing plates.

3. The head-up display device according to claim 1, wherein
the light-transmitting cover has a structure including a plurality of polarizing plates bonded together via an adhesive layer.

4. The head-up display device according to claim 2,
the light-transmitting cover has a structure including a plurality of polarizing plates bonded together via an adhesive layer.

5. The head-up display device according to claim 1, wherein
the light-transmitting cover has plane symmetry along a thickness direction.

6. The head-up display device according to claim 2, wherein
the light-transmitting cover has plane symmetry along a thickness direction.

7. The head-up display device according to claim 3, wherein
the light-transmitting cover has plane symmetry along a thickness direction.

8. The head-up display device according to claim 4, wherein
the light-transmitting cover has plane symmetry along a thickness direction.
